# EUROPEAN PATENT SPECIFICATION

(11) **EP 3 163 936 B1**
(45) Date of publication and mention of the grant of the patent: **06.03.2019**
(21) Application number: 16196079.4
(22) Date of filing: 27.10.2016
(51) Int. Cl.: H04W 24/02, H04W 4/02, H04W 48/16, H04W 72/08

(54) **ENHANCING NETWORK TOPOLOGY INFORMATION FOR A SELF-ORGANIZING NETWORK**
VERBESSERUNG VON NETZWERKTOPOLOGIEINFORMATIONEN FÜR EIN SELBSTORGANISIERENDES NETZWERK
AMÉLIORATION DES INFORMATIONS DE TOPOLOGIE DE RÉSEAU POUR UN RÉSEAU À AUTO-ORGANISATION

(30) Priority: 02.11.2015 US 201514929923
(43) Date of publication of application: 03.05.2017
(73) Proprietor: Viavi Solutions UK Limited, Newbury, Berkshire RG14 2PZ (GB)
(72) Inventor: CLARIDGE, Philip Geoffrey, Cambridge, CB23 7UY (GB); MURPHY, Christopher Michael, Bath, BA1 4LB (GB); THOMAS, Howard John, Stonehouse, GL10 3QQ (GB); PADFIELD, David Charles, Marlborough, Wiltshire SN8 1UR (GB); FEATHERSTONE, Walter, Newbury, Berkshire RG14 2PZ (GB); WANG, Meng, Guildford, Surrey GU3 3BS (GB)
(74) Representative: Murgitroyd & Company

(56) References cited:
- EP-A1- 2 621 211
- US-A1- 2002 187 746
- US-A1- 2014 269 364

## Description

### BACKGROUND

Mobile devices, such as smart phones, tablet computers, laptop computers, and other electronic hand-held devices, are becoming increasingly popular. In order to support the growing number of mobile devices, mobile networks (e.g., third generation (3G) and fourth generation (4G) mobile networks) employ radio network subsystems with macro cells using one or more high-powered base stations. Although advances in technology have made it possible for these base stations to cover relatively large geographical areas to improve mobile communications, this is a one-size-fits-all approach that may not adequately leverage network resources to fully optimize a mobile network for mobile communications.

With the advent of fifth generation (5G) systems that further develop the technology of network-function virtualization (NFV) and software-defined networking (SDN), the concept of delivering network infrastructure as a service (NaaS) is being introduced. Such networks may support multi-tenancy and may include an infrastructure that supports multiple operators of different types. Consequently, an individual operator's scope of control may be constrained to one or more portions or "slices" of the network infrastructure subject to an agreement with the infrastructure owner to receive the NaaS. Therefore, different users for a self-organizing network (SON) may target one or more individual slices of the network, where each network slice may include a different set of network functions.

US-A-2014/269364 discloses a method and system for cloud-based management of self-organizing wireless networks.

### SUMMARY

The invention is defined in the appended set of claims. The embodiments and/or examples of the following description which are not covered by the appended claims are considered as not being part of the present invention.

### BRIEF DESCRIPTION OF THE DRAWINGS

Figs. 1A-1C are diagrams of an overview of an example implementation described herein;
Fig. 2 is a diagram of an example environment in which systems and/or methods, described herein, may be implemented;
Fig. 3 is a diagram of example components of one or more devices of Fig. 2;
Fig. 4 is a flow chart of an example process for determining network performance information based on enhanced network topology information; and
Figs. 5A-5C are diagrams of an example implementation relating to the example process shown in Fig. 4.

### DETAILED DESCRIPTION

The following detailed description of example implementations refers to the accompanying drawings. The same reference numbers in different drawings may identify the same or similar elements.

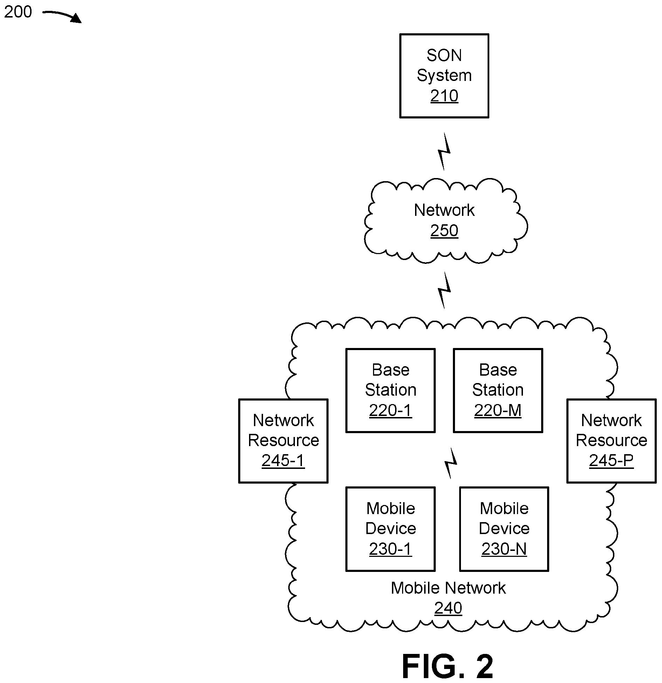

A mobile network may carry network traffic between an originating device and mobile devices via a radio interface between the mobile devices and base stations of the mobile network (e.g., macrocell base stations, microcell base stations, nanocell base stations, femtocell
base stations, eNBs, etc.). The radio interface may be implemented in a radio access network between the mobile devices and the base stations. The network traffic may travel between the base stations and the originating device, and/or amongst the base stations, via a backhaul network. In some cases, the backhaul network may include links that are capable of carrying a combination of backhaul network traffic (e.g., traffic from the radio access network to a carrier network), and fronthaul network traffic (e.g., traffic from the radio access network to antennas of the base stations). The backhaul network may include network resources, such as servers, routing devices, switches, hubs, gateways, and the like, as described in more detail in connection with Fig. 2, below. The backhaul network may include physical links that connect the base stations and/or the network resources (e.g., copper wires, optical fibers, wireless communication interfaces, etc.). The base stations and the network resources may be referred to herein as nodes of the mobile network. In some cases, a mobile device may also be referred to herein as a node.

The backhaul network and the radio access network may be described by a physical topology that identifies and/or describes the nodes and the physical links between the nodes. For example, the physical topology may identify capacities associated with the nodes and/or the physical links, may identify which nodes are physically linked (e.g., to other nodes of the mobile network, to nodes of another, different access network, etc.), may identify geographical locations of the nodes, or the like.

In some cases, a self-organizing or self-optimizing network (SON) system may reconfigure the nodes to improve network functionality based on the physical topology. For example, the SON system may route network traffic via a first set of nodes and/or physical links rather than a second set of nodes and/or physical links, based on capacity, usage, or the like, of the first set and the second set. However, the SON system may be incapable of improving network performance of nodes of both the radio access network and the backhaul network, or may be of reduced capability of improving network performance, based solely on the physical topology. For example, the physical topology may not always include information regarding usage, configuration, geographical distribution, Quality of Service (QoS) indicators, distribution of mobile devices, subscriber information, etc. associated with the radio access network, which may prevent the SON system from using the physical topology to improve functionality of the radio access network and the backhaul network.

Implementations described herein enable the SON system, or another device, to collect network topology information for the radio access network and the backhaul network. The network topology information may identify the physical topology, and may include other information, as described in more detail below. The SON system may enhance the network topology information based on, for example, network traffic information, geographical information (e.g., information identifying locations of nodes, geographical areas served by particular nodes, etc.), network configuration information, or the like. In some cases, the SON system may enhance the topology information by identifying virtual links between nodes (e.g., between base stations that cover adjacent cells, between base stations that are capable of handing off mobile devices to each other, based on common geographical locations of base stations and/or network resources, etc.). Based on the enhanced network topology information, the SON system may improve network functionality. In some cases, the SON system may identify faults and/or fault-prone nodes, networks, geographical areas, or the like, based on the enhanced network topology information. In this way, the SON system improves network performance, reduces network downtime, and conserves processor resources, storage resources, and bandwidth of nodes of the mobile network.

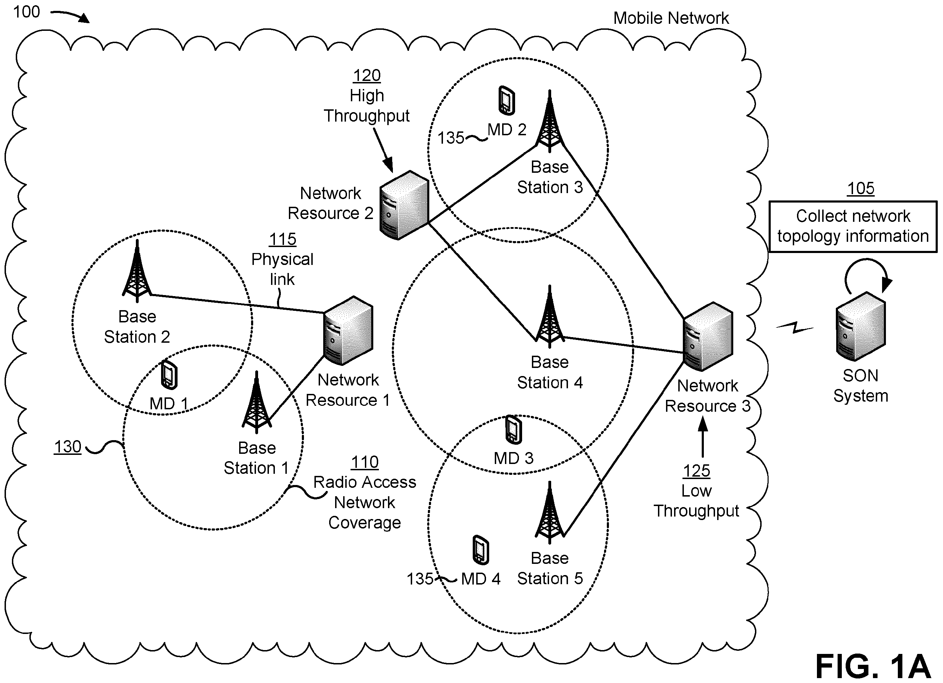

Figs. 1A-1C are diagrams of an overview of an example implementation 100 described herein. As shown in Fig. 1A, a mobile network may include a set of mobile devices (e.g., Mobile Devices 1 through 4, shown as MD 1 through MD 4, and referred to as "mobile device 230" or "mobile devices 230" in connection with Figs. 2 through 5), a set of base stations (e.g., Base Stations 1 through 5, and referred to as "base station 220" or "base stations 220" in connection with Figs. 2 through 5), and a set of network resources (e.g., Network Resources 1 through 5, and referred to as "network resource 245" or "network resources 245" in connection with Figs. 2 through 5). The set of base stations may provide network access to the set of mobile devices via radio interfaces with mobile devices of the set of mobile devices. The set of network resources may process data received from and/or provided to the mobile devices (e.g., to route the data, to store the data, to perform load balancing for base stations, to bill a subscriber for data usage associated with the mobile network, etc.).

As shown by reference number 105, a SON system may obtain (e.g., receive, collect, etc.) network topology information relating to the mobile network. As shown by reference number 110, in some cases, the network topology information may identify a coverage area of a radio access network provided by the base stations. For example, here, Base Station 1 and Base Station 2 provide coverage to Mobile Device 1, Base Station 3 provides coverage to Mobile Device 2, Base Station 4 provides coverage radio access to Mobile Device 3, and Base Station 5 provides coverage to Mobile Devices 3 and 4.

As shown by reference number 115, base stations and network resources may be connected by physical links, which may be identified by and/or described by the network topology information. A physical link may include, for example, an optical cable between two devices, a copper wire between two devices, a wireless communication channel between two devices, or the like. As shown by reference number 120, Network Resource 2 may be associated with a relatively high throughput (e.g., a throughput that is greater than a threshold). As shown by reference number 125, Network Resource 3 may be associated with a relatively low throughput (e.g., a throughput that is less than the threshold). The throughputs associated with Network Resources 2 and 3 may be related to, for example, a rate at which data can be transmitted via the network resource, a quantity of sessions (e.g., sessions with base stations, sessions with other network resources, sessions with mobile devices, etc.) that the network resource is capable of supporting, or the like.

As shown by reference number 130, some mobile devices may be covered by multiple base stations. Here, Mobile Device 1 is covered by Base Station 1 and Base Station 2 and Mobile Device 3 is covered by Base Station 4 and Base Station 5. If, for example, Mobile Device 1 is connected with Base Station 1, and Base Station 1 fails (e.g., fails to provide a particular quality of service, becomes inactive, fails to connect with Mobile Device 1, etc.), Mobile Device 1 may connect with Base Station 2.

As shown by reference number 135, some mobile devices may be covered by a single base station of the mobile network. For example, Mobile Device 2 is only covered by Base Station 3, and Mobile Device 4 is only covered by Base Station 5. If, for example, Base Station 3 fails, Mobile Device 2 will not be covered by any base station associated with the mobile network, and therefore may be unable to access the mobile network.

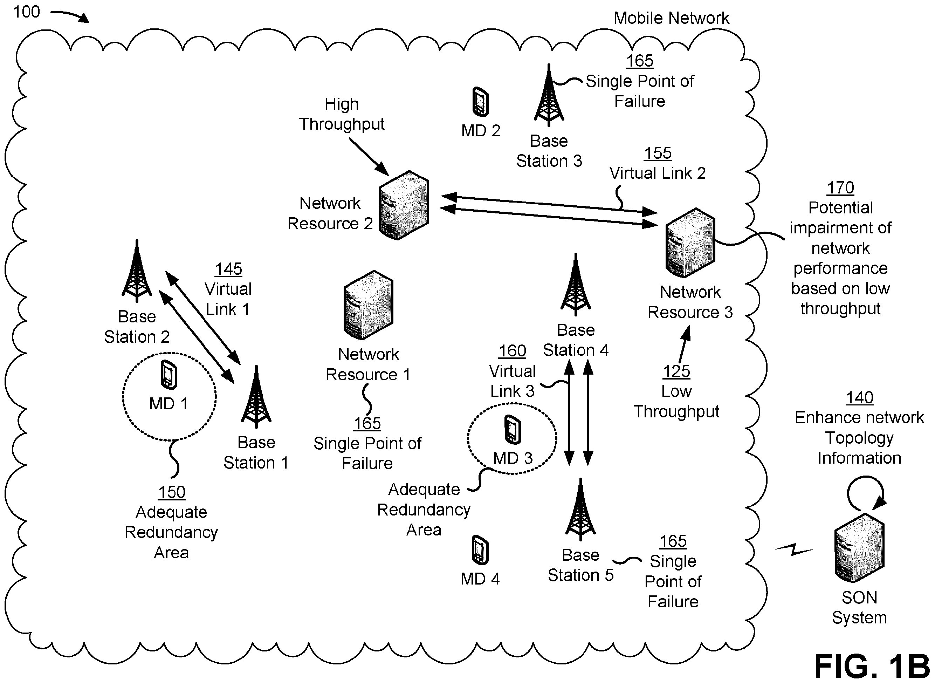

As shown in Fig. 1B, and by reference number 140, the SON system may enhance the network topology information. For example, the SON system may determine enhancement information identifying virtual links between base stations and/or network resources, may identify single points of failure for the mobile network, may identify areas that are associated with adequate network redundancy, may identify potential impairments of network performance, or the like, as described in more detail below.

As shown by reference number 145, in some cases, the SON system may identify a virtual link between two or more base stations. Here, the SON system identifies Virtual Link 1 between Base Station 1 and Base Station 2. Assume that the SON system identifies Virtual Link 1 based on Base Station 1 and Base Station 2 being able to hand off Mobile Device 1. For example, the SON system may determine that Base Station 1 and Base Station 2 are associated with an overlapping radio access network coverage area, may determine that Base Station 1 and Base Station 2 are identified by a neighbor relation table, or the like. As shown by reference number 150, the SON system may determine that Mobile Device 1 is included in an area that is associated with adequate redundancy, which may indicate that Mobile Device 1 can connect to a second node in the event of failure of a first node (e.g., based on Virtual Link 1).

As shown by reference number 155, the SON system may identify a virtual link between two or more network resources. Here, the SON system identifies Virtual Link 2 between Network Resource 2 and Network Resource 3. The SON system may identify Virtual Link 2 based on, for example, Network Resource 2 and Network Resource 3 both being physically linked with Base Station 4 and/or Base Station 5. As shown by reference number 160, the SON system may identify Virtual Link 3 between Base Station 4 and Base Station 5 (e.g., based on Base Station 4 and Base Station 5 being capable of handing off Mobile Device 3).

As shown by reference number 165, in some cases, the SON system may identify devices (e.g., mobile devices, base stations, and/or network resources) that are associated with a single point of failure. The SON system may identify a single point of failure in a situation where a failure of a single device may cause a mobile device, base station, and/or network resource to fail to connect with the mobile network (e.g., to fail to establish a connection with the mobile network, to cause a connection via the mobile network to be dropped, to cause a connection to fail to satisfy a service level agreement, etc.). Here, as shown, the SON system identifies single points of failure in association with Network Resource 1, Base Station 3, and Base Station 5.

As shown by reference number 170, in some cases, based on the network topology information, the SON system may identify a node that is associated with a potential impairment of network performance. For example, here, the SON system identifies a potential impairment of network performance in association with Network Resource 3 (e.g., based on Network Resource 3 being associated with a relatively low throughput as compared to a relatively high throughput of Network Resource 2, based on Network Resource 3 being physically connected with a greater quantity of base stations than Network Resource 1 or Network Resource 2, based on Network Resource 3 being a single point of failure for Base Station 5, etc.).

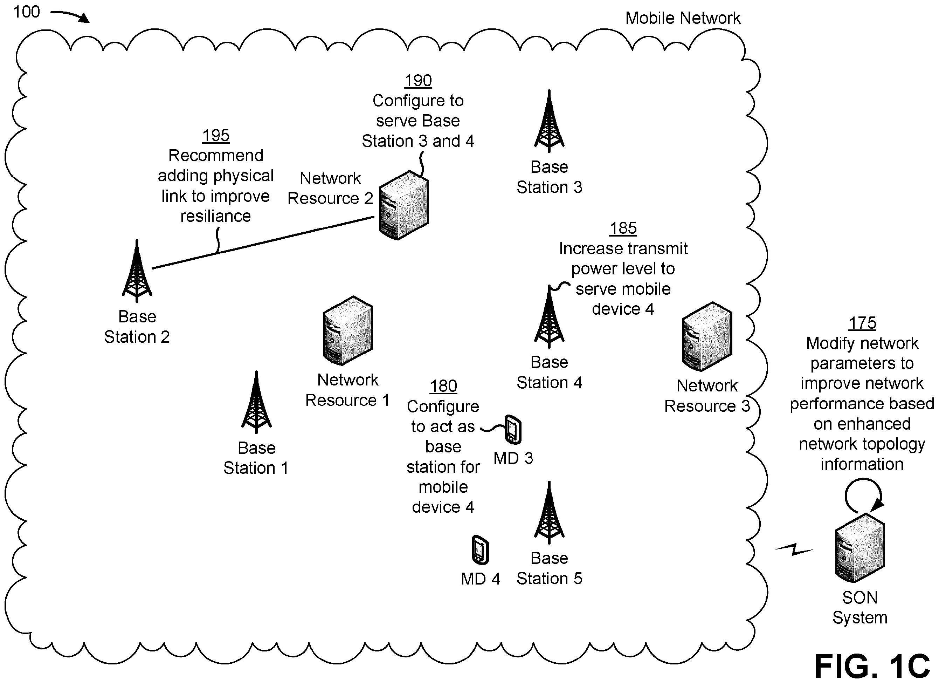

As shown in Fig. 1C, and by reference number 175, based on the enhanced network topology information, the SON system may modify network parameters relating to the mobile devices, base stations, and/or network resources of the mobile network. As further shown, the SON system may modify the network parameters to improve network performance. As shown by reference number 180, in some cases, the SON system may configure Mobile Device 3 to act as a base station for Mobile Device 4. In this way, the SON system improves redundancy of the mobile network with regard to Mobile Device 4, which improves network performance and reduces likelihood that Mobile Device 4 experiences a network failure.

As shown by reference number 185, in some cases, the SON system may configure Base Station 4 to change (e.g., increase) a transmit power level associated with Base Station 4. By increasing the transmit power level of Base Station 4, the SON system may increase a radio access network coverage area of Base Station 4 to cover Mobile Device 2. In this way, the SON system improves redundancy of the mobile network with regard to Mobile Device 2, which improves network performance and reduces likelihood that Mobile Device 2 experiences a network failure.

As shown by reference number 190, in some cases, the SON system may configure one or more network resources to serve one or more base stations. Here, the SON system configures Network Resource 2 to serve Base Stations 3 and 4 (e.g., based on Network Resource 2 being associated with a relatively high throughput, and based on Network Resource 3 being associated with a potential impairment of network performance). In this way, the SON system improves a distribution of network traffic within the mobile network, which improves network performance.

As shown by reference number 195, in some cases, the SON system may recommend adding and/or removing a physical link. Here, the SON system recommends adding a physical link between Base Station 2 and Network Resource 2. For example, the SON system may recommend adding the physical link based on Network Resource 1 being associated with a single point of failure for Base Station 2. In this way, the SON system improves network performance by reconfiguring a radio access network and a backhaul network of a mobile network, which reduces network downtime, conserves processor resources, conserves storage resources, and conserves bandwidth of base stations and network resources of the mobile network.

Fig. 2 is a diagram of an example environment 200 in which systems and/or methods, described herein, may be implemented. As shown in Fig. 2, environment 200 may include a SON system 210, one or more base stations 220-1 through 220-M (M ≥ 1) (hereinafter referred to collectively as "base stations 220" and individually as "base station 220"), one or more mobile devices 230-1 through 230-N (N ≥ 1) (hereinafter referred to collectively as "mobile devices 230," and individually as "mobile device 230"), a mobile network 240 with network resources 245-1 through 245-P (P ≥ 1) (hereinafter referred to collectively as "network resources 245," and individually as "network resource 245"), and a network 250. Devices of environment 200 may interconnect via wired connections, wireless connections, or a combination of wired and wireless connections.

SON system 210 may include one or more devices capable of receiving, generating, storing, processing, and/or providing information, such as information described herein. For example, SON system 210 may include one or more computing devices, such as one or more server devices, desktop computers, workstation computers, virtual machines (VMs) provided in a cloud computing environment, or similar devices. In some implementations, SON system 210 may be utilized by an entity that manages and/or operates one or more portions of environment 200, such as, for example, a telecommunication service provider, a television service provider, an Internet service provider, or the like. In some implementations, SON system 210 may be utilized by an entity that manages and/or operates mobile network 240. In some implementations, SON system 210 may be centralized (e.g., in association with network resource 245, in a backhaul network, etc.). Additionally, or alternatively, SON system 210 may be distributed (e.g., may be distributed over two or more base stations 220, two or more network resources 245, etc.).

Base station 220 may include one or more devices capable of transferring traffic, such as audio, video, text, and/or other traffic, destined for and/or received from mobile device 230. In some implementations, base station 220 may include an eNB associated with an LTE network that receives traffic from and/or sends traffic to network 250. Additionally, or alternatively, one or more base stations 220 may be associated with a RAN that is not associated with an LTE network. Base station 220 may send traffic to and/or receive traffic from mobile device 230 via an air interface. In some implementations, base station 220 may include a small cell base station, such as a base station of a microcell, a picocell, and/or a femtocell. In some implementations, base station 220 may communicate with another base station 220 of mobile network 240 regarding measurement information, network performance information, or the like.

Mobile device 230 may include one or more devices capable of communicating with base station 220 and/or a network (e.g., mobile network 240, network 250, etc.). For example, mobile device 230 may include a wireless communication device, a radiotelephone, a personal communications system (PCS) terminal (e.g., that may combine a cellular radiotelephone with data processing and data communications capabilities), a smart phone, a smart meter, a vehicle, a vending machine, a laptop computer, a tablet computer, a wearable device, a personal gaming system, and/or a similar device. Mobile device 230 may send traffic to and/or receive traffic from network 250 (e.g., via base station 220). In some implementations, mobile device 230 may function as a base station 220.

Mobile network 240 may include a mobile communications network, such as 3G mobile network, a 4G mobile network, a heterogeneous network, and/or a combination of these or other types of networks. In some implementations, mobile network 240 may correspond to an evolved packet system (EPS) that includes an operations support system (OSS), a radio access network (e.g., a long term evolution (LTE) network), a wireless core network (e.g., an evolved packet core (EPC) network), an Internet protocol (IP) multimedia subsystem (IMS) network, and a packet data network (PDN). The LTE network may include a base station (eNB). The EPC network may include a mobility management entity (MME), a serving gateway (SGW), a policy and charging rules function (PCRF), a PDN gateway (PGW), a base station controller (BSC), a radio network controller (RNC), an operations and maintenance centre (OMC), a network management system (NMS) and/or a network management center (NMC). The 3G core may include a mobile switching center (MSC), a serving general packet radio service (GPRS) service node (SGSN), a gateway GPRS support node (GGSN), or the like. The IMS network may include a home subscriber server (HSS), a proxy call session control function (P-CSCF), an interrogating call session control function (I-CSCF), and a serving call session control function (S-CSCF).

In some implementations, mobile network 240 may include one or more network resources 245, such as, for example, the OSS, the eNB, the MME, the SGW, the PCRF, the PGW, the HSS, the GGSN, the P-CSCF, the I-CSCF, the S-CSCF, or the like. In some implementations, network resources 245 may exchange information based on an interface (e.g., an X2 interface, a northbound interface (NBI), etc.).

In some implementations, mobile network 240 may include one or more device-to-device wireless networks where communication may occur through direct communication between devices, under the control of mobile network 240 or independently. In some implementations, direct device-to-device links may comprise one or more hops. Such direct device-to-device links may be used in a cooperative manner together with point-to-point and/or point-to-multi-point links mediated by mobile network 240.

Network 250 may include one or more wired and/or wireless networks. For example, network 250 may include a mobile network, a public land mobile network (PLMN), a local area network (LAN), a wide area network (WAN), a metropolitan area network (MAN), a telephone network (e.g., the Public Switched Telephone Network (PSTN)), an ad hoc network, an intranet, the Internet, a fiber optic-based network, a cloud computing network, a private network, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

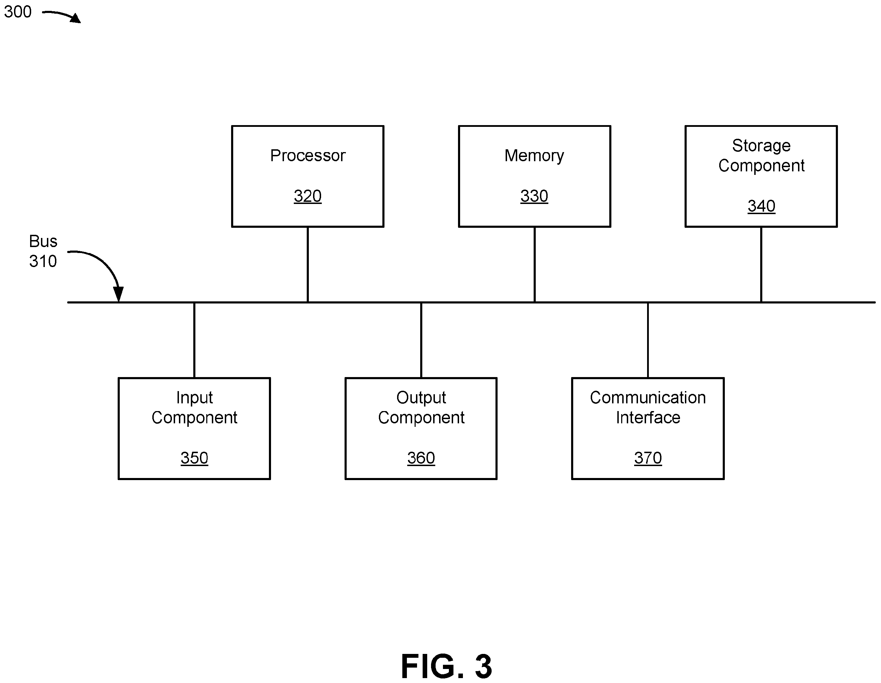

Fig. 3 is a diagram of example components of a device 300. Device 300 may correspond to SON system 210, base station 220, mobile device 230, and/or network resource 245. In some implementations, SON system 210, base station 220, mobile device 230, and/or network resource 245 may include one or more devices 300 and/or one or more components of device 300. As shown in Fig. 3, device 300 may include a bus 310, a processor 320, a memory 330, a storage component 340, an input component 350, an output component 360, and a communication interface 370.

Bus 310 may include a component that permits communication among the components of device 300. Processor 320 is implemented in hardware, firmware, or a combination of hardware and software. Processor 320 may include a processor (e.g., a central processing unit (CPU), a graphics processing unit (GPU), an accelerated processing unit (APU), etc.), a microprocessor, and/or any processing component (e.g., a field-programmable gate array (FPGA), an application-specific integrated circuit (ASIC), etc.) that interprets and/or executes instructions. In some implementations, processor 320 may include one or more processors capable of being programmed to perform a function. Memory 330 may include a random access memory (RAM), a read only memory (ROM), and/or another type of dynamic or static storage device (e.g., a flash memory, a magnetic memory, an optical memory, etc.) that stores information and/or instructions for use by processor 320.

Storage component 340 may store information and/or software related to the operation and use of device 300. For example, storage component 340 may include a hard disk (e.g., a magnetic disk, an optical disk, a magneto-optic disk, a solid state disk, etc.), a compact disc (CD), a digital versatile disc (DVD), a floppy disk, a cartridge, a magnetic tape, and/or another type of computer-readable medium, along with a corresponding drive.

Input component 350 may include a component that permits device 300 to receive information, such as via user input (e.g., a touch screen display, a keyboard, a keypad, a mouse, a button, a switch, a microphone, etc.). Additionally, or alternatively, input component 350 may include a sensor for sensing information (e.g., a global positioning system (GPS) component, an accelerometer, a gyroscope, an actuator, etc.). Output component 360 may include a component that provides output information from device 300 (e.g., a display, a speaker, one or more light-emitting diodes (LEDs), etc.).

Communication interface 370 may include a transceiver-like component (e.g., a transceiver, a separate receiver and transmitter, etc.) that enables device 300 to communicate with other devices, such as via a wired connection, a wireless connection, or a combination of wired and wireless connections. Communication interface 370 may permit device 300 to receive information from another device and/or provide information to another device. For example, communication interface 370 may include an Ethernet interface, an optical interface, a coaxial interface, an infrared interface, a radio frequency (RF) interface, a universal serial bus (USB) interface, a Wi-Fi interface, a cellular network interface, or the like.

Device 300 may perform one or more processes described herein. Device 300 may perform these processes in response to processor 320 executing software instructions stored by a non-transitory computer-readable medium, such as memory 330 and/or storage component 340. A computer-readable medium is defined herein as a non-transitory memory device. A memory device includes memory space within a single physical storage device or memory space spread across multiple physical storage devices.

Software instructions may be read into memory 330 and/or storage component 340 from another computer-readable medium or from another device via communication interface 370. When executed, software instructions stored in memory 330 and/or storage component 340 may cause processor 320 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 3 are provided as an example. In practice, device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

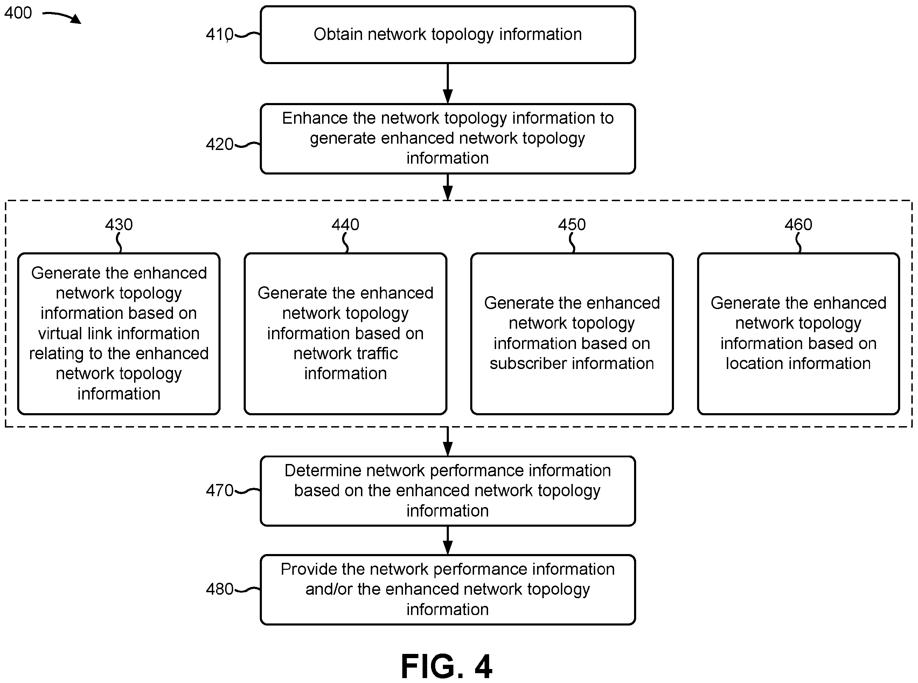

Fig. 4 is a flow chart of an example process 400 for determining network performance information based on enhanced network topology information. In some implementations, one or more process blocks of Fig. 4 may be performed by SON system 210. In some implementations, one or more process blocks of Fig. 4 may be performed by another device or a group of devices separate from or including SON system 210, such as base station 220, mobile device 230, and/or network resource 245.

As shown in Fig. 4, process 400 may include obtaining network topology information (block 410). For example, SON system 210 may obtain network topology information. The network topology information may describe one or more base stations 220, one or more network resources 245, and/or links between base stations 220 and/or network resources 245. In some implementations, SON system 210 may obtain the network topology information relating to a particular base station 220 and/or network resource 245 from the particular base station 220 and/or network resource 245. Additionally, or alternatively, SON system 210 may obtain the network topology information from another device (e.g., mobile device 230, a server that stores network topology information, a radio network management system, a microwave backhaul link management system, an optical network element management system, an optical network management system, a network resource inventory device, etc.).

In some implementations, the network topology information may include information concerning network resource 245. For example, the network topology information may identify a device type of network resource 245, a capacity of network resource 245 (e.g., a data throughput capacity, a quantity of base stations 220 and/or mobile devices 230 that can be served by network resource 245, a processor capacity of network resource 245, etc.), a geographical location of network resource 245, a network address associated with network resource 245, a device identifier associated with network resource 245, a cost associated with network resource 245, or the like.

In some implementations, the network topology information may include information concerning base station 220. For example, the network topology information may identify a network type associated with base station 220, a geographical location of base station 220, a network address associated with base station 220, a quantity of mobile devices 230 connected with base station 220, a capacity of base station 220 (e.g., a data throughput capacity of base station 220, a quantity of mobile devices 230 with which base station 220 is capable of connecting, a processor capacity of base station 220, etc.), a cost of base station 220, or the like.

In some implementations, the network topology information may include information identifying and/or describing physical links between base stations 220, between base stations 220 and network resources 245, and/or between network resources 245. For example, the network topology information may identify and/or describe a pair of network resources 245 that are connected (e.g., by a copper wire, by an optical fiber, by a wireless link, etc.). In some implementations, the network topology information may identify a capacity associated with the link, a latency associated with the link, or the like. In some implementations, the network topology information may identify and/or describe a link between base stations 220 (e.g., a medium associated with the connection, a capacity of the connection, a latency associated with the connection, an interface associated with the link, etc.). In some implementations, the network topology information may identify a connection between base station 220 and network resource 245. For example, the network topology information may identify one or more network resources 245 that provide network traffic to and/or receive network traffic from base station 220, one or more network resources 245 that route traffic associated with base station 220, or the like.

In some implementations, the network topology information may include information identifying logical links between base stations 220, between base stations 220 and network resources 245, and/or between network resources 245. A logical link may include, for example, an Ethernet link that is established between network resources 245, a bearer that is established between base stations 220, between a base station 220 and a network resource 245, and/or between network resources 245, a communication interface between base stations 220, between a base station 220 and a network resource 245, and/or between network resources 245 (e.g., an X2 interface, an S1 interface, a S12 interface, a Gb interface, an S3 interface, an S6 interface, an S11 interface, a S10 interface, a Gx interface, a Gn interface, a SGi interface, an S5 interface, an R7 DT interface, an S4 interface, an Iu interface, etc.), a radio connection between base station 220 and another device (e.g., a transceiver associated with mobile network 240, a transceiver associated with another access network, etc.), or the like. In some implementations, the network topology information may identify a logical link that includes one or more mobile devices 230. For example, the logical link may identify one or more mobile devices 230 that are included in a device-to-device communication link, a communication interface between base station 220, mobile device 230, and/or network resource 245, a bearer between mobile device 230 and another device, or the like.

In some implementations, the network topology information may relate to multiple, different access networks and/or network types. For example, the network topology information may identify a network type of mobile network 240 (e.g., a 3G network, a 4G network, a 3GPP network, a 5G network, etc.) and/or another access network (e.g., a wireless local area network included in a coverage area of mobile network 240, such as a WiFi network, a Bluetooth network, etc.). In some implementations, the network topology information may identify one or more network resources 245 associated with a particular access network and/or network type. For example, the network topology information may identify a particular SGW, a particular PGW, a particular router, a particular switch, a particular gateway GPRS support node (GGSN), or the like, that is associated with one or more access networks (e.g., that is included in a backhaul data path for the one or more access networks).

In some implementations, the network topology information may identify interference. For example, the network topology information may identify interference associated with a radio interface, interference associated with a physical link, interference associated with signals for a radio access network, or the like. In some implementations, the network topology information may identify a location associated with the interference (e.g., a source of the interference, a geographical area affected by the interference, locations of nodes associated with the interference, etc.).

In some implementations, the network topology information may identify network resources 245 that are associated with two or more different backhaul networks. For example, a first network operator may implement a set of base stations 220 and a first set of network resources 245-1 to provide network access for mobile devices 230. A second network operator may implement a second set of network resources 245-2 to provide network access, via the set of base stations 220, for the mobile devices 230. For example, the second network operator may lease access, to the set of base stations 220, from the first network operator. In some implementations, the second network operator may lease use of the first set of network resources 245-1 from the first network operator, and the second set of network resources 245-2 may store subscriber information for subscribers accessing mobile network 240 via the set of base stations 220 and the first set of network resources 245-1.

In such cases, the network topology information may identify the set of base stations 220, the first set of network resources 245-1, and the second set of network resources 245-2. The network topology information may indicate that the set of base stations 220 and the first set of network resources 245-1 are associated with the first network operator, and that the second set of network resources 245-2 are associated with the second network operator.

As further shown in Fig. 4, process 400 may include enhancing the network topology information to generate enhanced network topology information (block 420). For example, SON system 210 may enhance the network topology information to generate enhanced network topology information. SON system 210 may generate the enhanced network topology information based on enhancement information relating to usage, configuration, location, or the like, of mobile network 240 and/or one or more other access networks. In some implementations, SON system 210 may generate the enhanced network information based on virtual link information (e.g., as described in more detail in connection with block 430, below), network traffic information (e.g., as described in more detail in connection with block 440, below), subscriber information (e.g., as described in more detail in connection with block 450, below), location information (e.g., as described in more detail in connection with block 460, below), or the like.

In some implementations, the enhancement information may relate to radio connectivity of one or more mobile devices 230. For example, the enhancement information may identify one or more radio access networks to which mobile device 230 is connected (e.g., mobile network 240, a WiFi network, a Bluetooth network, etc.), one or more radio access networks to which mobile device 230 is capable of connecting, an air interface between mobile device 230 and a radio access network, or the like.

In some implementations, the enhancement information may relate to functionality of network resource 245. For example, the enhancement information may identify an operational condition of network resource 245 (e.g., may identify whether network resource 245 is active, may identify whether network resource 245 is associated with a failure, may identify processor usage of network resource 245, may identify capacity usage of network resource 245, etc.). In some implementations, the enhancement information may relate to functionality of base station 220 (e.g., whether base station 220 is active or inactive, whether base station 220 is associated with a source of interference, whether base station 220 is a mobile device 230 operating in a relay mode or a device-to-device mode, an antenna tilt associated with base station 220, a transmit power associated with base station 220, etc.).

As further shown in Fig. 4, process 400 may include generating the enhanced network topology information based on virtual link information relating to the enhanced network topology information (block 430). For example, in some cases, SON system 210 may generate the enhanced network topology information based on virtual link information. The virtual link information may identify one or more virtual links between nodes. In some implementations, SON system 210 may obtain the virtual link information (e.g., from base station 220, mobile device 230, network resource 245, etc.). Additionally, or alternatively, SON system 210 may determine the virtual link information (e.g., based on the network topology information, based on information obtained from one or more nodes of mobile network 240 and/or another access network, etc.).

In some implementations, a virtual link may identify a relationship between two or more nodes based on network topology information, a configuration of the two or more nodes, locations of the two or more nodes, or the like. For example, when a first base station 220-1 is capable of handing over mobile devices 230 to a second base station 220-2, the first base station 220-1 and the second base station 220-2 may share a virtual link. As another example, if a first base station 220-1 and a second base station 220-2 serve the same cell coverage area or an overlapping portion of a cell coverage area, the first base station 220-1 and the second base station 220-2 may share a virtual link. As yet another example, if a first network resource 245-1 and a second network resource 245-2 serve overlapping geographical areas, the first network resource 245-1 and the second network resource 245-2 may share a virtual link. As still another example, a set of network resources 245 that serve a geographical area that is covered by a WiFi access point may share a virtual link indicating that the set of network resources 245 can offload mobile devices 230 to the WiFi access point. As another example, a pair of mobile devices 230 that are capable of establishing a device-to-device connection may be associated with a virtual link.

In some implementations, SON system 210 may identify a virtual link based on, for example, a neighbor relation list identifying neighboring base stations 220, a radio connectivity between radio transceivers of base station 220 and/or mobile device 230 (e.g., a predicted radio connectivity, a measured connection, a measured radio connectivity, a modeled radio connectivity, etc.), or the like. In some implementations, the radio connectivity may include connectivity between two or more transceivers associated with mobile network 240, connectivity between a node of mobile network 240 and a node that is not associated with mobile network 240, connectivity between two or more mobile devices 230 where one or more of the mobile devices 230 is acting as a base station 220, or the like.

As further shown in Fig. 4, process 400 may include generating the enhanced network topology information based on network traffic information (block 440). For example, in some cases, SON system 210 may generate the enhanced network topology information based on network traffic information. In some implementations, SON system 210 may obtain the network traffic information from one or more nodes. For example, SON system 210 may request the network traffic information from the one or more nodes, may collect and store the network traffic information, or the like. In some implementations, SON system 210 may determine the network traffic information (e.g., may collect network traffic information, and may determine the network traffic information based on the collected network traffic information).

The network traffic information may identify information relating to usage of base station 220, mobile network 240, and/or network resource 245. For example, the network traffic information may identify a quantity of mobile devices 230 connected with a particular node, a quantity of mobile devices 230 capable of being connected with a particular node (e.g., in range of base station 220, connected with a base station 220 associated with the particular node, etc.), capacity information for a particular node (e.g., in data carried per second, contemporaneous call volume, contemporaneous session volume, processor availability, etc.), or the like. In some implementations, the network traffic information may indicate that a node is approaching or at a maximum capacity. For example, the network traffic information may indicate that network resource 245 is associated with an observed capacity that satisfies a threshold capacity (e.g., a threshold processor usage value, a threshold data throughput value, etc.).

In some implementations, the network traffic information may be associated with a particular access network. For example, the network traffic information may identify a quantity of mobile devices 230 connecting with base station 220 via a particular access network type. As another example, assume that a first quantity of mobile devices 230-1 transmit network traffic to network resource 245 via a first access network of a first access network type, and that a second quantity of mobile devices 230-2 transmit network traffic to network resource 245 via a second access network of a second access network type. In that case, the network traffic information may identify the first quantity and the first access network type, and/or may identify the second quantity and the second access network type.

In some implementations, the network traffic information may identify a failure associated with a link and/or a node. For example, the network traffic information may identify a physical link that is associated with a failure (e.g., a failure to perform at a particular service level, a failure to carry network traffic, etc.), a node that is associated with a failure (e.g., a failure of network resource 245, of base station 220, etc.), or the like.

In some implementations, the network traffic information may include downlink information. The downlink information may relate to information received by and/or provided by mobile device 230. For example, the downlink information may include information relating to circuit-switched calls placed by mobile device 230 (e.g., a quantity of calls, a duration of calls, etc.), packet-switched calls received and/or provided by mobile device 230 (e.g., a quantity of calls, a duration of calls, etc.), Voice-over-LTE calls received and/or provided by mobile device 230 (e.g., a quantity of calls, a duration of calls, etc.), a transmit power level associated with mobile device 230, a downlink path loss between base station 220 and mobile device 230, a frequency associated with a downlink channel between base station 220 and mobile device 230, a downlink received signal code power (RSCP) associated with mobile device 230, a downlink received energy per chip (Ec) for mobile device 230, a downlink noise power density (N0) for mobile device 230, a received signal reference quality (RSRQ) for mobile device 230, a power headroom identifier for mobile device 230, a channel quality indication (CQI), a sub-band CQI, an estimate of a channel rank, information according to an E-UTRA standard (e.g., LTE 36.331, LTE 36.423, etc.), or the like.

In some implementations, the network traffic information may include uplink information. The uplink information may relate to information received by and/or provided by base station 220. For example, the uplink information may identify a frequency of a downlink channel provided by base station 220, an uplink RSSI associated with base station 220, an uplink SNR for information received by base station 220, an uplink modulation and coding scheme (MCS) associated with base station 220, a noise floor, a throughput associated with base station 220 (e.g., in bits per second, kilobits per second, megabits per second, a quantity of calls routable, a quantity of sessions that base station 220 can maintain, etc.), a downlink propagation loss for base station 220, a difference between an uplink channel frequency and a downlink channel frequency, a received total wideband power (RWTP), a training sequence code (TSC), a preamble, a cycle prefix, one or more buffer status reports, or the like.

In some implementations, the network traffic information may relate to multiple base stations 220. For example, the multiple base stations 220 may intercommunicate (e.g., via an X2 interface, etc.) to determine network traffic information for one or more cells. The network traffic information relating to multiple base stations 220 may include, for example, one or more high uplink interference indicators, one or more uplink interference overload indicators, a relative narrowband transmit power of two or more base stations 220, an almost-blank-subframe (ABS) message transmitted between two or more base stations 220, intended uplink/downlink configuration information, cooperative multipoint information (CoMP information), a CoMP hypothesis, network assisted interference cancellation information, or the like. The network traffic information may relate to a carrier, a sub-carrier, a sub-band, a resource block, and/or a cell.

As further shown in Fig. 4, process 400 may include generating the enhanced network topology information based on subscriber information (block 450). For example, in some cases, SON system 210 may generate the enhanced network topology information based on subscriber information. The subscriber information may identify subscribers that are associated with mobile network 240. In some implementations, SON system 210 may obtain the subscriber information from mobile device 230. For example, SON system 210 may obtain information identifying subscribers from mobile devices 230 associated with the subscribers. In some implementations, SON system 210 may obtain the subscriber information from network resource 245. For example, network resource 245 (e.g., an HSS, an AAA, etc.) may store subscriber information, and SON system 210 may query network resource 245 for the subscriber information.

In some implementations, the subscriber information may identify subscribers associated with a particular node. For example, the subscriber information may identify subscribers (e.g., a quantity of subscribers, identities of subscribers, etc.), that are associated with the particular node at a time when the subscriber information is collected, may identify subscribers that are typically connected with the particular node, may identify subscribers that were connected with the particular node at a time that a failure associated with the particular node occurred, may identify subscribers that are associated with mobile devices 230 that can be handed over to the particular node, or the like. In some implementations, the particular node may be a base station 220, mobile device 230, or network resource 245 of mobile network 240. Additionally, or alternatively, the particular node may be associated with another access network.

In some implementations, the subscriber information may identify a particular subscriber (e.g., based on an international mobile subscriber identity (IMSI), an account number, a mobile directory number (MDN), etc.), a service level agreement associated with the particular subscriber, location information associated with the particular subscriber, or the like.

In some implementations, the subscriber information may indicate whether a subscriber is associated with a first network operator or a second network operator. For example, in a situation where two or more network operators provide network access via a particular set of base stations 220, the subscriber information for mobile devices 230 associated with the particular set of base stations 220 may identify whether the mobile devices 230 are associated with the first network operator or the second network operator.

As further shown in Fig. 4, process 400 may generating the enhanced network topology information based on location information (block 460). For example, SON system 210 may generate the enhanced network topology information based on location information. In some implementations, SON system 210 may obtain the location information (e.g., from base station 220, from mobile device 230, from network resource 245, etc.). Additionally, or alternatively, SON system 210 may determine the location information (e.g., based on the network topology information, based on the network traffic information, based on the subscriber information, etc.).

In some implementations, the location information may identify a geographical area that is covered by a particular node, link, or the like. For example, the location information may identify a coverage area of a particular base station 220, a set of cells that are served by a particular network resource 245, a coverage area of base stations 220 that are associated with a particular physical link to network resource 245, or the like. In some implementations, the location information may identify subscribers associated with a geographical area (e.g., identities of the subscribers, service level agreements associated with the subscribers, a quantity of the subscribers, a distribution of the subscribers within the geographical area, etc.).

In some implementations, the location information may identify geographical locations of one or more mobile devices 230. Additionally, or alternatively, the location information may identify geographical locations of one or more base stations 220 (e.g., base stations 220 associated with mobile network 240, base stations 220 associated with another access network, etc.). Additionally, or alternatively, the location information may identify geographical locations of network resources 245 (e.g., a geographical location of a component of network resource 245, a service area of a particular network resource 245, etc.).

In some implementations, the location information may identify a geographical area that is associated with a single point of failure. For example, assume that a particular geographical area is covered by radio access network coverage from a single base station 220. In that case, the location information may identify the single base station 220 and/or the particular geographical area, and may indicate that mobile devices 230 in the particular geographical area are associated with a single point of failure (e.g., the single base station 220). As another example, assume that the particular geographical area is served by a single network resource 245. That is, assume that, if the single network resource 245 fails, the particular geographical area will experience a service interruption. In that case, the location information may identify the single network resource 245 and the particular geographical area.

In some implementations, the location information may identify a geographical traffic distribution. For example, the location information may identify a quantity of network traffic associated with a geographical area (e.g., a quantity of data originating from and/or destined to mobile devices 230 in the geographical area, a quantity of subscribers included in the geographical area, a quantity of logical links established in the geographical area, a quantity of virtual links that are established and/or that can be established in the geographical area, etc.). In some implementations, the location information may identify a geographical traffic distribution for a particular base station 220. For example, assume that a particular base station 220 covers a first area and a second area. Assume further that the first area is associated with a higher call volume than the second area. In that case, location information relating to the particular base station 220 may identify the first area as being associated with the higher call volume (e.g., higher than a threshold, higher than an average call volume, etc.), and may identify the second area as being associated with a lower call volume (e.g., lower than the higher call volume, lower than a threshold, lower than an average call volume, etc.).

As further shown in Fig. 4, process 400 may include determining network performance information based on generating the enhanced network topology information (block 470). For example, SON system 210 may determine network performance information based on the enhanced network topology information. The enhanced network topology information may include one or more of the types of enhanced network topology information described in connection with blocks 430 through 460, above. In some implementations, the network performance information may identify one or more impairments to network performance, as described in more detail below. Additionally, or alternatively, the network performance information may identify modifications to network parameters to improve network performance, as described in more detail below.

SON system 210 may identify an impairment to network performance based on, for example, a particular node, geographical area, and/or access network that is associated with one or more points of failure (e.g., a single point of failure, a quantity of points of failure that satisfies a threshold, etc.). As another example, SON system 210 may identify an impairment to network performance based on a link (e.g., a physical link, a virtual link, and/or a logical link) and/or a node (e.g., base station 220, mobile device 230, and/or network resource 245) that does not satisfy a threshold (e.g., a capacity threshold, a throughput threshold, a service level threshold, etc.). Additionally, or alternatively, SON system 210 may identify an impairment to network performance based on a failure of a link and/or a node (e.g., an outage of network resource 245, a severed cable of a physical link, a link and/or node that is incapable of carrying an amount of network traffic associated with the link and/or node, etc.). Other examples of impairments to network performance are possible, and the above list of impairments to network performance is not intended to be exhaustive.

In some implementations, SON system 210 may predict impairments to network performance and/or may determine modifications to network parameters based on a predictive model. For example, in some implementations, SON system 210 may obtain observed network performance information. The observed network performance information may identify observed values of network performance information (e.g., observed based on measurements taken in mobile network 240, etc.) that are associated with enhanced network topology information. SON system 210 may receive and/or determine the enhanced network topology information and the observed network performance information, and may generate a predictive model relating the enhanced network topology information and the observed network performance information. In some implementations, to generate a predictive model, SON system 210 may determine a correlation between an input variable (e.g., in enhanced network topology information) and an output variable (e.g., in observed network performance information). SON system 210 may determine one or more operations to perform on the input variable to predict a value of the output variable. In this way, SON system 210 may generate a predictive model to predict network performance information, based on enhanced network topology information.

Additionally, or alternatively, SON system 210 may train an existing predictive model. For example, SON system 210 may determine modifications to network parameters based on particular enhanced network topology information, and may implement the modifications to the network parameters. SON system 210 may determine predicted network performance information based on the existing predictive model and the modifications to the network parameters. SON system 210 may receive and/or determine additional enhanced network topology information (e.g., enhanced network topology information associated with a different time, a different traffic level, a different set of subscribers, a different service level, etc.) than the particular enhanced network topology information. SON system 210 may determine observed network performance information based on the additional network topology information, and may compare the observed network performance information to the predicted network performance information. If the predicted network performance information is inaccurate, SON system 210 may adjust the predictive model to improve accuracy of predicted network performance information. In this way, SON system 210 trains a predictive model, which improves accuracy of the predicted network performance information and thus improves network performance.

When reconfiguring nodes, links, and/or mobile network 240 to improve network performance, SON system 210 may determine modifications to network parameters. The network parameters may relate to base station 220, mobile device 230, and/or network resource 245. For example, network parameters relating to base station 220 may include a power level, a cell geometry, a signal modulation/coding scheme, or the like. The modification may include, for example, modifying transmitted power levels, neighbor cell relation tables, antenna electrical tilts, antenna mechanical tilts, antenna pointing direction/angles (e.g., elevation, tilt, and/or azimuth), handover thresholds, or the like. In some implementations, SON system 210 may recommend deactivating one or more base stations 220 and/or activating one or more base stations 220. In this way, SON system 210 causes base station 220 to be configured based on enhanced network topology information, which improves performance of mobile network 240.

In some implementations, network parameters relating to network resource 245 may include, for example, a quantity of subscribers and/or mobile devices 230 that network resource 245 is permitted to serve, a geographical area associated with network resource 245, particular base stations 220 that are associated with network resource 245, a data throughput that network resource 245 is permitted to carry, or the like. The modification may include, for example, changing the quantity of subscribers and/or mobile devices 230 that network resource 245 is permitted to serve, reconfiguring a logical link that includes network resource 245, activating or deactivating network resource 245, or the like. In this way, SON system 210 causes network resource 245 to be configured based on enhanced network topology information, which improves performance of mobile network 240.

In some implementations, SON system 210 may cause multiple base stations 220 and/or network resources 245 to be configured to improve network performance. For example, in a situation where SON system 210 determines that a first network resource 245-1 is associated with an impairment to network performance based on data throughput of the first network resource 245-1, SON system 210 may cause one or more base stations 220 (e.g., to route network traffic to a second network resource 245-2, to reduce a quantity of network traffic received by the one or more base stations 220 and routed to the first network resource 245-1, to split network traffic between the first network resource 245-1 and the second network resource 245-2, etc.) and/or a second network resource 245-2 (e.g., to cause the second network resource 245-2 to serve one or more geographical areas and/or mobile devices 230 that were originally served by the first network resource 245-1, to cause the second network resource 245-2 to share network traffic with the first network resource 245-1, to cause the second network resource 245-2 to provide redundancy for the first network resource 245-1 with regard to the data throughput, etc.) to be configured. In this way, SON system 210 causes the radio access network (e.g., base station 220) and/or the backhaul network (e.g., network resource 245) to be configured based on enhanced network topology information, which improves network performance, reduces latency, and conserves processor resources of network resources 245.

As an example, assume that SON system 210 trains a predictive model for mobile network 240 based on enhanced network topology information and observed network performance information relating to a particular cell of mobile network 240. Assume that, when the predictive model receives information indicating that the particular cell is associated with a failure to satisfy a service level agreement of subscribers in the particular cell, the predictive model outputs a first modification to a network parameter indicating to decrease a size of the particular cell. When SON system 210 obtains enhanced network topology information indicating that the particular cell is associated with a failure to satisfy a service level agreement of subscribers in the area, SON system 210 may input the enhanced network topology information to the predictive model. Based on an output of the predictive model, SON system 210 may cause base station 220 at the particular cell to decrease a size of the particular cell.

Now assume that SON system 210 receives additional enhanced network topology information indicating that the particular cell is still associated with a failure to satisfy the service level agreement of subscribers in the particular cell. In that case, SON system 210 may determine that the first modification is ineffective, and may train the predictive model to determine a second modification to a network parameter. Assume that the second modification to the network parameter indicates to configure network resources 245 to share network traffic associated with the particular cell, and assume that SON system 210 causes the network resources 245 to be configured to share the network traffic associated with the particular cell. If SON system 210 receives enhanced network topology information indicating that the service level agreement is satisfied, SON system 210 may determine that the second modification is effective, and may train the predictive model to output the second modification based on input enhanced network topology information indicating that a cell is associated with a failure to satisfy a service level agreement.

In some implementations, SON system 210 may predict that a predicted impairment of network performance is likely to occur, and may determine modifications to network parameters to mitigate the predicted impairment. For example, SON system 210 may determine that a particular base station 220 and/or network resource 245 is likely to cause a predicted impairment (e.g., based on a location of the particular base station 220 and/or network resource 245, based on a configuration of the particular base station 220 and/or network resource 245, based on historical usage information for mobile devices 230 associated with the particular base station 220 and/or network resource 245, etc.). Based on the predicted impairment, SON system 210 may determine modifications to network parameters relating to the particular base station 220 and/or network resource 245.

For example, SON system 210 may cause the particular base station 220 and/or network resource 245, when the impairment is detected, to reroute network traffic to another base station 220 and/or network resource 245, to notify a network engineer, to increase data throughput of the particular base station 220 and/or network resource 245, to offload one or more mobile devices 230 to a nearby access network (e.g., a WiFi network, another radio access network, etc.), to activate one or more base stations 220 and/or network resources 245, or the like. In this way, SON system 210 plans for a predicted impairment before the predicted impairment occurs, which improves network performance and conserves processor resources of SON system 210 that would otherwise be used to reconfigure mobile network 240 in response to occurrence of the predicted impairment.

In some implementations, SON system 210 may modify network parameters to improve network performance with regard to a device-to-device connection. For example, a first mobile device 230-1 may provide network traffic to and/or receive network traffic from a second mobile device 230-2 via one or more base stations 220, other mobile devices 230, and/or network resources 245. SON system 210 may modify network parameters associated with the one or more base stations 220, other mobile devices 230, and/or network resources 245 to improve a device-to-device connection between the first mobile device 230-1 and the second mobile device 230-2. For example, SON system 210 may cause network traffic for the device-to-device connection to be routed via network resources 245 that are located near the first mobile device 230-1 and/or the second mobile device 230-2, may cause the network traffic to be routed via network resources 245 that are capable of handling the network traffic, or the like.

In some implementations, SON system 210 may determine that a particular base station 220 and/or network resource 245 is associated with an impairment to network performance, and may cause one or more mobile devices 230 to establish a device-to-device communication session based on the impairment to network performance. For example, SON system 210 may cause a particular mobile device 230 to function as a base station 220 based on the impairment to network performance, may cause the particular base station 220 and/or network resource 245 to offload network traffic to one or more mobile devices 230 (e.g., for routing, for processing, etc.) based on the impairment to network performance, or the like. In this way, SON system 210 reduces an impact of an impairment to network performance, which improves network performance and conserves processor resources and bandwidth for the particular base station 220 and/or network resource 245.

In some implementations, SON system 210 may identify an impairment to network performance and/or identify modifications to network parameters based on a point of failure and/or a resilience of mobile network 240. For example, SON system 210 may determine that a failure of a particular base station 220 may cause a set of mobile devices 230 to lose wireless coverage. In that case, SON system 210 may determine that the set of mobile devices 230 are associated with a single point of failure (e.g., the particular base station 220). SON system 210 may modify network parameters relating to base station 220 (e.g., to increase a transmitted power level of another base station 220 to cover the set of mobile devices 230, etc.), one or more mobile devices 230 (e.g., to cause mobile device 230 to act as a base station 220 for the set of mobile devices 230), or the like. In this way, SON system 210 improves redundancy for mobile network 240, which improves network performance and conserves processor resources of a node associated with the single point of failure.

In some implementations, SON system 210 may improve resilience of mobile network 240 based on a network traffic priority associated with network traffic. For example, mobile device 230, and/or network traffic associated with mobile device 230, may be associated with a network traffic priority. A network traffic priority may include, for example, a QoS indicator, an enhanced 911 (E911) indicator, an indicator associated with a particular geographical area, an indicator associated with a particular base station 220, or the like. Base station 220 and/or network resource 245 may prioritize network traffic that is associated with a higher network traffic priority over network traffic that is associated with a lower network traffic priority. For example, base station 220 and/or network resource 245 may provide network traffic of a higher network traffic priority before network traffic of a lower network traffic priority, may assign more bandwidth for network traffic of a higher network traffic priority than network traffic of a lower network traffic priority, or the like.

SON system 210 may determine modifications to network parameters based on network traffic priority for mobile devices 230. In some cases, network traffic that is associated with a lower network traffic priority is more likely to cause an impairment to network performance than network traffic that is associated with a higher network traffic priority (e.g., based on the network traffic that is associated with the lower network traffic priority being dropped or delayed before the network traffic that is associated with the higher network traffic priority).

To improve resilience of mobile network 240, SON system 210 may configure one or more network resources 245 to provide redundancy for the network traffic that is associated with the lower network traffic priority. That is, if the network traffic is preempted, on a first network resource 245-1, by other network traffic, the first network resource 245-1 may reroute the network traffic to a second network resource 245-2. In some implementations, SON system 210 may configure the one or more network resources 245 to provide similar redundancy (e.g., greater than a threshold quantity of points of failure, an equal quantity of points of failure, etc.) for each mobile device 230 and/or network traffic flow. In this way, SON system 210 improves network resilience, and thereby improves network performance, by providing redundancy for network traffic that is associated with relatively low network traffic priority.

In some implementations, SON system 210 may cause mobile device 230 to communicate via a particular access network. For example, assume that mobile device 230 is located in range of mobile network 240 and a WiFi access network. Assume further that mobile network 240 is associated with an impairment to network performance (e.g., based on network congestion). In that case, SON system 210 may cause mobile device 230 to communicate via the WiFi access network. As another example, assume that an ePDG associated with the WiFi access network is associated with an impairment to network performance (e.g., based on a device outage). In that case, SON system 210 may cause mobile device 230 to communicate via mobile network 240. In this way, SON system 210 causes mobile device 230 to communicate via an access network that is capable of carrying network traffic associated with mobile device 230, which improves network performance and reduces latency and packet loss associated with the network traffic.

In some implementations, SON system 210 may determine network performance information relating to two or more network operators. For example, a first network operator may be associated with a first set of base stations 220-1 and/or network resources 245-1, and a second network operator may be associated with a second set of base stations 220-2 and/or network resources 245-2. SON system 210 may determine network performance information for the first set of base stations 220-1 and/or network resources 245-1, and for the second set of base stations 220-2 and/or network resources 245-2. Based on the network performance information, SON system 210 may cause one or more mobile devices 230 to connect to the first set of base stations 220-1 and/or network resources 245-1 or the second set of base stations 220-2 and/or network resources 245-2.

In some implementations, based on the network performance information, SON system 210 may generate network sharing information. The network sharing information may identify a potential distribution of network traffic between the first set of base stations 220 and/or network resources 245, and the second set of base stations 220 and/or network resources 245. In some implementations, SON system 210 may generate a visual representation based on the network sharing information, may cause the first set of base stations 220 and/or network resources 245 and/or the second set of base stations 220 and/or network resources 245 to be configured based on the network sharing information, or the like. In this way, SON system 210 determines network performance information relating to multiple, different network operators, which permits SON system 210 to improve network performance of access networks corresponding to the multiple, different network operators.

As further shown in Fig. 4, process 400 may include providing the network performance information and/or the enhanced network topology information (block 480). For example, SON system 210 may provide the network performance information and/or the enhanced network topology information. In some implementations, SON system 210 may provide information identifying modifications to network parameters (e.g., to cause base station 220, mobile device 230, and/or network resource 245 to implement the modifications, to a network engineer, for storage, etc.).

In some implementations, SON system 210 may generate a visual representation of the network performance information and/or the enhanced network topology information. For example, SON system 210 may generate a table identifying points of failure and nodes and/or links associated with the points of failure. In some implementations, the table may identify quantities of subscribers associated with the points of failure, a relative importance of subscribers associated with the points of failure (e.g., based on service level agreements associated with the subscribers, etc.), or the like.

In some implementations, SON system 210 may generate a visual representation that identifies enhanced network topology information. For example, SON system 210 may generate a visual representation of links (e.g., physical links, logical links, virtual links, etc.), base stations 220 (e.g., base stations 220 that are associated with impairments to network performance, base stations 220 that are associated with network parameters to be modified, base stations 220 that are associated with points of failure for mobile network 240, base stations 220 that are associated with a first network operator or a second network operator in a network sharing arrangement, etc.), mobile devices 230 (e.g., concentrations of mobile devices 230 in a particular area, base stations 220 with which a set of mobile devices 230 communicates, mobile devices 230 that are associated with points of failure, etc.), network resources 245 (e.g., network resources 245 that are associated with impairments to network performance, network resources 245 that are associated with network parameters to be modified, network resources 245 that are associated with points of failure for mobile network 240, network resources 245 that are associated with a first network operator or a second network operator in a network sharing arrangement, etc.), or the like.

In some implementations, SON system 210 may generate a visual representation based on the location information. For example, the visual representation may identify geographical areas and respective points of failure for the geographical areas, may identify a geographical area that is associated with an impairment to network performance, may identify a geographical area that is associated with (e.g., served by, covered by, etc.) a particular base station 220 and/or network resource 245, or the like.

In some implementations, SON system 210 may determine configuration actions to perform to cause one or more nodes to be configured based on network performance information. For example, SON system 210 may determine one or more configuration actions to be performed (e.g., by base station 220), with regard to an uplink, based on an updated power level, an updated cell geometry, an updated signal modulation/coding scheme, or the like. The configuration action may include, for example, modifying transmitted power levels, neighbor cell relation tables, antenna electrical tilts, antenna mechanical tilts, antenna pointing direction/angles (e.g., elevation, tilt, and/or azimuth), handover thresholds, or the like. In some implementations, SON system 210 may recommend deactivating one or more base stations 220 and/or activating one or more base stations 220. Additionally, or alternatively, SON system 210 may cause mobile network 240 and/or network resource 245 to be configured based on the network performance information, as described in more detail above. In this way, SON system 210 may determine configuration actions to perform with regard to base station 220 to adjust network configuration data, which improves performance of the uplink and thus improves mobile network performance.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

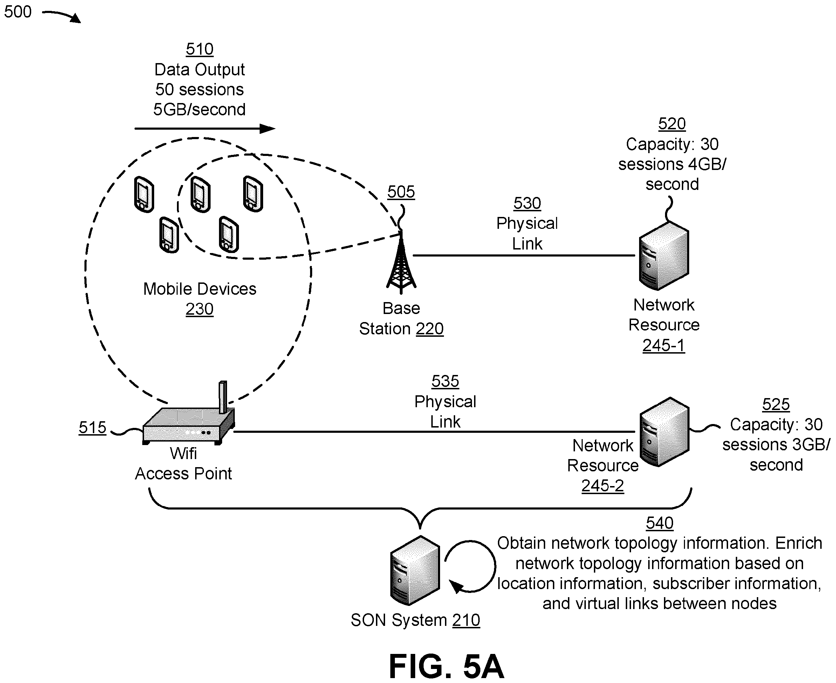

Figs. 5A-5C are diagrams of an example implementation 500 relating to example process 400 shown in Fig. 4. Figs. 5A-5C show an example of determining network performance information based on enhanced network topology information.

As shown in Fig. 5A, and by reference number 505, base station 220 may provide radio access network coverage to a set of mobile devices 230. As further shown, the radio access network may not cover a subset of the set of mobile devices 230. As shown by reference number 510, the set of mobile devices 230 may be associated with a particular data output rate (e.g., 50 data sessions, and 5 gigabytes (GB) per second). The set of mobile devices 230 may output data, at the data output rate and via the identified quantity of data sessions, to mobile network 240 (e.g., via a radio access network associated with base station 220 and/or via another access network). As shown by reference number 515, a WiFi access point may provide another access network. As further shown, the other access network may cover the set of mobile devices 230.

As shown by reference number 520, network resource 245-1 may be associated with a first capacity (e.g., 30 data sessions, and 4 GB per second). As shown by reference number 525, network resource 245-2 may be associated with a second capacity (e.g., 30 data sessions, and 3 GB per second). As shown by reference number 530, network resource 245-1 may be connected with base station 220 via a first physical link. That is, network resource 245-1 may be included in a backhaul network for base station 220. As shown by reference number 535, network resource 245-2 may be connected with the WiFi access point by a second physical link. That is, network resource 245-2 may be included in a backhaul network for the WiFi access point.

As shown by reference number 540, SON system 210 may obtain network topology information. The network topology information may identify, for example, the set of mobile devices 230, base station 220, the WiFi access point, network resources 245-1 and 245-2, the first physical link, the second physical link, the first capacity, the second capacity, or the like. As further shown, SON system 210 may enhance the network topology information based on location information (e.g., location information identifying coverage areas of the WiFi access point and/or base station 220, identifying geographical locations of the WiFi access point and/or network resources 245-1 and 245-2, identifying geographical locations of the set of mobile devices 230, etc.), subscriber information (e.g., subscriber information identifying and/or related to subscribers associated with the set of mobile devices 230, etc.), and virtual links between nodes of mobile network 240 (e.g., a virtual link between network resource 245-1 and network resource 245-2, a virtual link between the WiFi access point and base station 220, etc.).

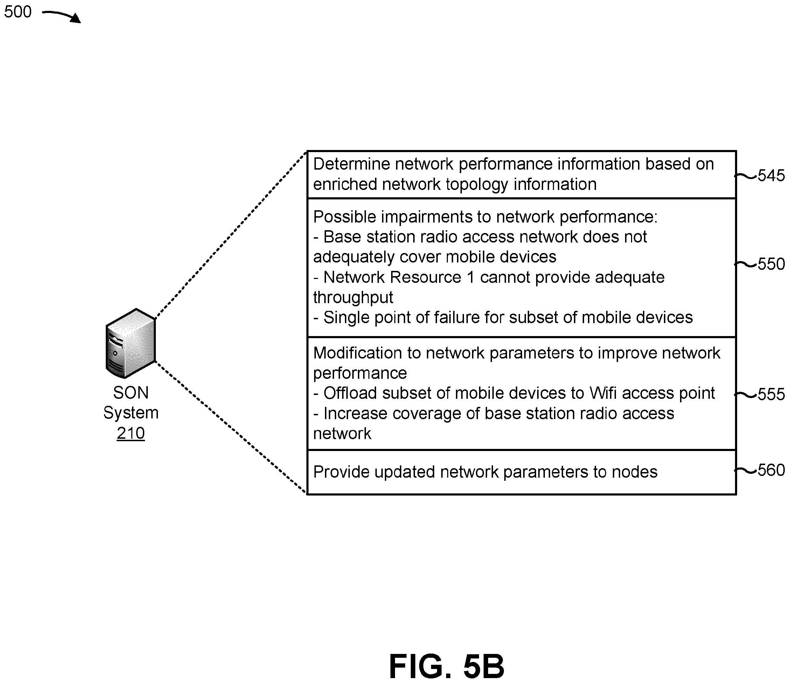

As shown in Fig. 5B, and by reference number 545, SON system 210 may determine network performance information based on the enhanced network topology information. For example, SON system 210 may input the enhanced network topology information to a predictive model, and the predictive model may output the network performance information.

As shown by reference number 550, the network performance information may identify possible impairments to network performance. Here, the network performance information identifies a first possible impairment based on base station 220 not adequately covering the set of mobile devices 230 (e.g., based on base station 220 not covering the subset of the set of mobile devices 230). As further shown, the network performance information identifies a second possible impairment based on network resource 245-1 being incapable of providing adequate throughput for the set of mobile devices 230 (e.g., based on the data output rate for the set of mobile devices 230 and based on the first capacity associated with network resource 245-1). As further shown, the network performance information identifies a third possible impairment based on the subset of mobile devices 230 being associated with a single point of failure (e.g., the WiFi access point and/or network resource 245-2).

As shown by reference number 555, the network performance information may identify modifications to network parameters. The modifications to the network parameters, if implemented, may improve network performance of mobile network 240. For example, the modifications may mitigate and/or prevent occurrence of one or more of the possible impairments to network performance. Here, the network performance information identifies a first modification of offloading the subset of mobile devices 230 to the WiFi access point. By causing the subset of mobile devices 230 to be offloaded, SON system 210 reduces data transmitted via network resource 245-1, which reduces likelihood of occurrence of the second possible impairment.

As further shown, the network performance information identifies a second modification of increasing a transmit power level of base station 220. By causing the transmit power level of base station 220 to be increased, SON system 210 increases coverage of base station 220, which may cause base station 220 to cover each mobile device 230 of the set of mobile devices 230. In this way, SON system 210 mitigates the first possible impairment and the third possible impairment, which improves network performance and reduces processor load associated with network resources 245-1 and 245-2. As shown by reference number 560, SON system 210 may determine to provide the updated network parameters to nodes of mobile network 240 (e.g., base station 220, the set of mobile devices 230, network resources 245-1 and 245-2, etc.) to cause the nodes to implement the updated network parameters.

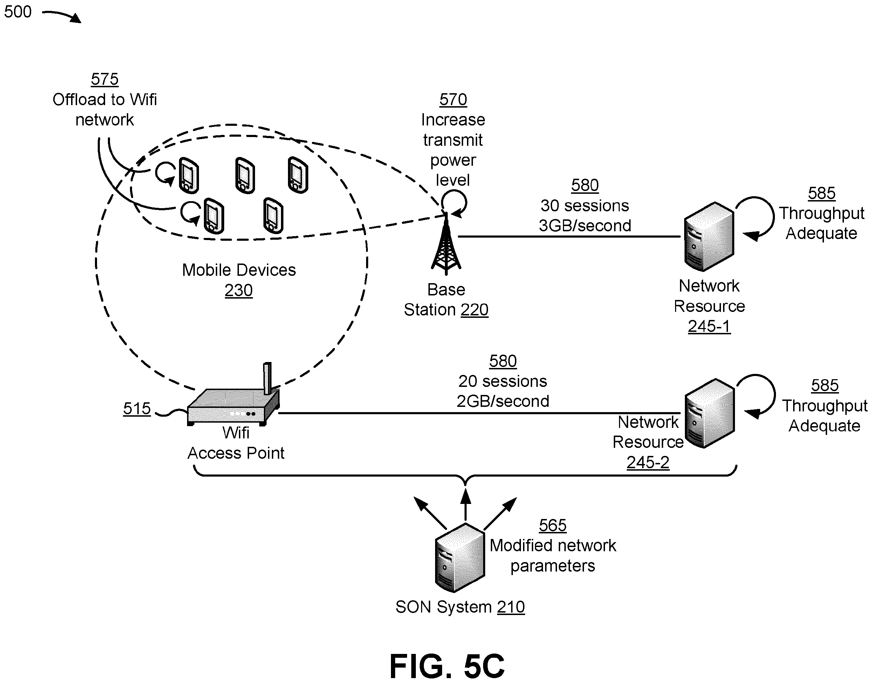

As shown in Fig. 5C, and by reference number 565, SON system 210 may provide the updated network parameters to the nodes of mobile network 240. As shown by reference number 570, base station 220 may increase a transmit power level based on the updated network parameters. Based on the increased transmit power level, base station 220 may cover each mobile device 230 of the set of mobile devices 230. In this way, base station 220 improves redundancy for the set of mobile devices 230, which improves network performance and reduces processor usage and/or bandwidth usage of network resource 245-1.

As shown by reference number 575, the subset of mobile devices 230 may be offloaded to the WiFi access point and network resource 245-2. For example, base station 220 may end sessions with the subset of mobile devices 230, may cause the subset of mobile devices 230 to establish sessions with the WiFi access point, or the like. As shown by reference number 580, based on offloading the subset of mobile devices 230, network resource 245-1 may be associated with 30 sessions and 3 GB per second of network traffic, and network resource 245-2 may by associated with 20 sessions and 2 GB per second of network traffic. As shown by reference number 585, the first capacity associated with network resource 245-1, and the second capacity associated with network resource 245-2, are adequate for the network traffic. In this way, SON system 210 reduces a quantity of network traffic provided via network resource 245-1, which conserves processor and bandwidth resources of network resource 245-1, and improves network performance.

As indicated above, Figs. 5A-5C are provided merely as an example. Other examples are possible and may differ from what was described with regard to Figs. 5A-5C.

In this way, a SON system improves network performance by reconfiguring a radio access network and a backhaul network of a mobile network, which reduces network downtime, conserves processor resources, conserves storage resources, and conserves bandwidth of base stations and network resources of the mobile network.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code it being understood that software and hardware can be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related items, and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. A device adapted for enhancing network topology information for a self-organized network, comprising:
one or more processors adapted to:
obtain a network topology information that identifies a plurality of nodes of a network and one or more physical links between nodes of the plurality of nodes,
the network topology information indicating a processor load associated with a node of the plurality of nodes,
the plurality of nodes including one or more base stations, one or more mobile devices, and one or more network resources,
the one or more network resources including a server, a routing device, a switch, a hub, or a gateway;
generate enhanced network topology information based on a virtual link information, wherein the virtual link information identifies one or more virtual links between nodes;
where the nodes share a virtual link when at least one of the following conditions are met:
a first base station is capable of handing over mobile devices to a second base station,
the first base station and the second base station serve a same cell coverage area or an overlapping portion of a cell coverage area,
a first network resource and a second network resource serve overlapping geographical areas, or
a pair of mobile devices is capable of establishing a device-to-device connection;
determine network performance information based on the enhanced network topology information,
the network performance information identifying an impairment in performance of the plurality of nodes, and identifying a modification to a network parameter to improve network performance,
the impairment in performance being a failure or a link that does not satisfy a capacity threshold; and
provide information identifying the modification to the network parameter to cause the modification to the network parameter to be implemented.

2. The device of claim 1, where the one or more processors, when determining the network performance information, are adapted to:
generate a model to predict the network performance information,
the model outputting the network performance information based on receiving the enhanced network topology information as input.

3. The device of claim 2, where the one or more processors are adapted to:
obtain observed network performance information, identifying observed values of network performance information based on measurements taken in the network; and
train the model based on comparing the observed network performance information to the network performance information outputted by the model.

4. The device of any of the preceding claims, where the enhanced network topology information is generated based on the virtual link information and location information identifying one of: i) a geographic location of one or more of the plurality of nodes, ii) information identifying a coverage area of a node of the plurality of nodes, iii) information identifying network traffic associated with a particular geographical area.

5. The device of any of the preceding claims, where the enhanced network topology information is generated based on the virtual link information and subscriber information identifying one or more subscriber devices connected with one or more of the plurality of nodes.

6. A method for enhancing network topology information for a self-organized network, executed by a device, comprising:
obtaining a network topology information that identifies a plurality of nodes of a network and one or more physical links between nodes of the plurality of nodes,
the network topology information indicating a processor load associated with a node of the plurality of nodes,
the plurality of nodes including one or more base stations, one or more mobile devices, and one or more network resources,
the one or more network resources including a server, a routing device, a switch, a hub, or a gateway;
generating enhanced network topology information based on a virtual link information, wherein the virtual link information identifies one or more virtual links between nodes;
where the nodes share a virtual link when at least one of the following conditions are met:
a first base station is capable of handing over mobile devices to a second base station,
the first base station and the second base station serve a same cell coverage area or an overlapping portion of a cell coverage area,
a first network resource and a second network resource serve overlapping geographical areas, or
a pair of mobile devices is capable of establishing a device-to-device connection;
determining network performance information based on the enhanced network topology information,
the network performance information identifying an impairment in performance of the plurality of nodes, and identifying a modification to a network parameter to improve network performance,
the impairment in performance being a failure or a link that does not satisfy a capacity threshold; and
providing information identifying the modification to the network parameter to cause the modification to the network parameter to be implemented.

7. The method of claim 6, where the plurality of nodes is a first plurality of nodes associated with a first network operator; and
where obtaining the network topology information comprises:
obtaining network topology information that identifies a second plurality of nodes associated with a second network operator; and
where the method further comprises:
generating information that identifies a distribution of network traffic between the first plurality of nodes and the second plurality of nodes.

8. The method of claim 7 where the first plurality of nodes includes a plurality of base stations and a plurality of network resources; and
where mobile devices communicate with the second plurality of nodes via one or more base stations, of the plurality of base stations included in the first plurality of nodes.

9. The method of claim 7 where the first plurality of nodes includes a plurality of base stations and a plurality of network resources; and
where mobile devices communicate with the second plurality of nodes via one or more network resources, of the plurality of network resources included in the first plurality of nodes.

10. The method of claim 9, further comprising:
determining the information that identifies the distribution of network traffic between the first plurality of nodes and the second plurality of nodes based on subscriber information associated with one or more nodes of the second plurality of nodes,
the subscriber information associated with the one or more nodes of the second plurality of nodes being different than the subscriber information associated with the one or more nodes of the first plurality of nodes.

11. The method of any one of claims 6-10, where the enhanced network topology information is generated based on the virtual link information and location information identifying one of i) a geographic location of one or more of the plurality of nodes, ii) information identifying a coverage area of a node of the plurality of nodes, iii) information identifying network traffic associated with a particular geographical area.

12. The method of any one of claims 6-11, where the enhanced network topology information is generated based on the virtual link information and subscriber information identifying one or more subscriber devices connected with one or more of the plurality of nodes.

13. A computer program product comprising machine executable instructions residing on computer readable media, which, when loaded and executed by a processor, cause the processor to perform operations according to the method of any one of claims 6-12.

## Patentansprüche

1. Eine Vorrichtung, die zum Verbessern von Netzwerktopologieinformationen für ein selbstorganisiertes Netzwerk angepasst ist, beinhaltend:
einen oder mehrere Prozessoren, die für Folgendes angepasst sind:
Erhalten von Netzwerktopologieinformationen, die eine Vielzahl von Knoten eines Netzwerks und eine oder mehrere physikalische Verbindungen zwischen Knoten der Vielzahl von Knoten identifizieren,
wobei die Netzwerktopologieinformationen eine mit einem Knoten der Vielzahl von Knoten assoziierte Prozessorlast angeben,
wobei die Vielzahl von Knoten eine oder mehrere Basisstationen, eine oder mehrere mobile Vorrichtungen und eine oder mehrere Netzwerkressourcen umfasst,
wobei die eine oder die mehreren Netzwerkressourcen einen Server, eine Routingvorrichtung, einen Switch, einen Hub oder einen Gateway umfassen;
Erzeugen von verbesserten Netzwerktopologieinformationen auf der Basis von Informationen über virtuelle Verbindungen, wobei die Informationen über virtuelle Verbindungen eine oder mehrere virtuelle Verbindungen zwischen Knoten identifizieren;
wobei die Knoten eine virtuelle Verbindung miteinander teilen, wenn mindestens eine der folgenden Bedingungen erfüllt wird:
eine erste Basisstation ist in der Lage, mobile Vorrichtungen an eine zweite Basisstation zu übergeben,
die erste Basisstation und die zweite Basisstation bedienen das gleiche Zellenversorgungsgebiet oder einen überlappenden Bereich eines Zellenversorgungsgebiets,
eine erste Netzwerkressource und eine zweite Netzwerkressource bedienen überlappende geographische Gebiete oder
ein Paar mobile Vorrichtungen ist in der Lage, eine Verknüpfung von Vorrichtung zu Vorrichtung einzurichten;
Bestimmen von Netzwerkleistungsinformationen auf der Basis der verbesserten Netzwerktopologieinformationen,
wobei die Netzwerkleistungsinformationen eine Beeinträchtigung der Leistung der Vielzahl von Knoten identifizieren und eine Modifikation an einem Netzwerkparameter zum Steigern der Netzwerkleistung identifizieren,
wobei die Beeinträchtigung der Leistung eine Störung oder eine Verbindung ist, die eine Kapazitätsschwelle nicht einhält; und Bereitstellen von Informationen, die die Modifikation an dem Netzwerkparameter identifizieren, um zu bewirken, dass die Modifikation an dem Netzwerkparameter implementiert wird.

2. Vorrichtung gemäß Anspruch 1, wobei der eine oder die mehreren Prozessoren beim Bestimmen der Netzwerkleistungsinformationen für Folgendes angepasst sind:
Erzeugen eines Modells, um die Netzwerkleistungsinformationen vorherzusagen,
wobei das Modell die Netzwerkleistungsinformationen auf der Basis des Empfangens der verbesserten Netzwerktopologieinformationen als Eingabe ausgibt.

3. Vorrichtung gemäß Anspruch 2, wobei der eine oder die mehreren Prozessoren für Folgendes angepasst sind:
Erhalten von beobachteten Netzwerkleistungsinformationen, die beobachtete Werte von Netzwerkleistungsinformationen identifizieren, auf der Basis von in dem Netzwerk vorgenommenen Messungen; und
Trainieren des Modells auf der Basis des Vergleichens der beobachteten Netzwerkleistungsinformationen mit den von dem Modell ausgegebenen Netzwerkleistungsinformationen.

4. Vorrichtung gemäß einem der vorhergehenden Ansprüche, wobei die verbesserten Netzwerktopologieinformationen erzeugt werden auf der Basis der Informationen über virtuelle Verbindungen und Standortinformationen, die eines von Folgendem identifizieren: i) einen geographischen Standort von einem oder mehreren der Vielzahl von Knoten, ii) Informationen, die ein Versorgungsgebiet eines Knotens der Vielzahl von Knoten identifizieren, iii) Informationen, die Netzwerkverkehr, der mit einem bestimmten geographischen Gebiet assoziiert ist, identifizieren.

5. Vorrichtung gemäß einem der vorhergehenden Ansprüche, wobei die verbesserten Netzwerktopologieinformationen erzeugt werden auf der Basis der Informationen über virtuelle Verbindungen und Teilnehmerinformationen, die eine oder mehrere mit einem oder mehreren der Vielzahl von Knoten verknüpfte Teilnehmervorrichtungen identifizieren.

6. Ein Verfahren zum Verbessern von Netzwerktopologieinformationen für ein selbstorganisiertes Netzwerk, das von einer Vorrichtung ausgeführt wird, beinhaltend:
Erhalten von Netzwerktopologieinformationen, die eine Vielzahl von Knoten eines Netzwerks und eine oder mehrere physikalische Verbindungen zwischen Knoten der Vielzahl von Knoten identifizieren,
wobei die Netzwerktopologieinformationen eine mit einem Knoten der Vielzahl von Knoten assoziierte Prozessorlast angeben,
wobei die Vielzahl von Knoten eine oder mehrere Basisstationen, eine oder mehrere mobile Vorrichtungen und eine oder mehrere Netzwerkressourcen umfasst,
wobei die eine oder die mehreren Netzwerkressourcen einen Server, eine Routingvorrichtung, einen Switch, einen Hub oder einen Gateway umfassen;
Erzeugen von verbesserten Netzwerktopologieinformationen auf der Basis von Informationen über virtuelle Verbindungen, wobei die Informationen über virtuelle Verbindungen eine oder mehrere virtuelle Verbindungen zwischen Knoten identifizieren;
wobei die Knoten eine virtuelle Verbindung miteinander teilen, wenn mindestens eine der folgenden Bedingungen erfüllt wird:
eine erste Basisstation ist in der Lage, mobile Vorrichtungen an eine zweite Basisstation zu übergeben,
die erste Basisstation und die zweite Basisstation bedienen das gleiche Zellenversorgungsgebiet oder einen überlappenden Bereich eines Zellenversorgungsgebiets,
eine erste Netzwerkressource und eine zweite Netzwerkressource bedienen überlappende geographische Gebiete oder
ein Paar mobile Vorrichtungen ist in der Lage, eine Verknüpfung von Vorrichtung zu Vorrichtung einzurichten;
Bestimmen von Netzwerkleistungsinformationen auf der Basis der verbesserten Netzwerktopologieinformationen,
wobei die Netzwerkleistungsinformationen eine Beeinträchtigung der Leistung der Vielzahl von Knoten identifizieren und eine Modifikation an einem Netzwerkparameter zum Steigern der Netzwerkleistung identifizieren,
wobei die Beeinträchtigung der Leistung eine Störung oder eine Verbindung ist, die eine Kapazitätsschwelle nicht einhält; und
Bereitstellen von Informationen, die die Modifikation an dem Netzwerkparameter identifizieren, um zu bewirken, dass die Modifikation an dem Netzwerkparameter implementiert wird.

7. Verfahren gemäß Anspruch 6, wobei die Vielzahl von Knoten eine mit einem ersten Netzwerkbetreiber assoziierte erste Vielzahl von Knoten ist; und
wobei das Erhalten der Netzwerktopologieinformationen Folgendes beinhaltet:
Erhalten der Netzwerktopologieinformationen, die eine mit einem zweiten Netzwerkbetreiber assoziierte zweite Vielzahl von Knoten identifizieren; und
wobei das Verfahren ferner Folgendes beinhaltet:
Erzeugen von Informationen, die eine Verteilung von Netzwerkverkehr zwischen der ersten Vielzahl von Knoten und der zweiten Vielzahl von Knoten identifizieren.

8. Verfahren gemäß Anspruch 7, wobei die erste Vielzahl von Knoten eine Vielzahl von Basisstationen und eine Vielzahl von Netzwerkressourcen umfasst; und
wobei mobile Vorrichtungen über eine oder mehrere Basisstationen der Vielzahl von Basisstationen, die in der ersten Vielzahl von Knoten umfasst sind, mit der zweiten Vielzahl von Knoten kommunizieren.

9. Verfahren gemäß Anspruch 7, wobei die erste Vielzahl von Knoten eine Vielzahl von Basisstationen und eine Vielzahl von Netzwerkressourcen umfasst; und
wobei mobile Vorrichtungen über eine oder mehrere Netzwerkressourcen der Vielzahl von Netzwerkressourcen, die in der ersten Vielzahl von Knoten umfasst sind, mit der zweiten Vielzahl von Knoten kommunizieren.

10. Verfahren gemäß Anspruch 9, ferner beinhaltend:
Bestimmen der Informationen, die die Verteilung von Netzwerkverkehr zwischen der ersten Vielzahl von Knoten und der zweiten Vielzahl von Knoten identifizieren, auf der Basis von Teilnehmerinformationen, die mit einem oder mehreren Knoten der zweiten Vielzahl von Knoten assoziiert sind,
wobei sich die Teilnehmerinformationen, die mit dem einen oder den mehreren Knoten der zweiten Vielzahl von Knoten assoziiert sind, von den Teilnehmerinformationen, die mit dem einen oder den mehreren Knoten der ersten Vielzahl von Knoten assoziiert sind, unterscheiden.

11. Verfahren gemäß einem der Ansprüche 6-10, wobei die verbesserten Netzwerktopologieinformationen erzeugt werden auf der Basis der Informationen über virtuelle Verbindungen und Standortinformationen, die eines von Folgendem identifizieren: i) einen geographischen Standort von einem oder mehreren der Vielzahl von Knoten, ii) Informationen, die ein Versorgungsgebiet eines Knotens der Vielzahl von Knoten identifizieren, iii) Informationen, die Netzwerkverkehr, der mit einem bestimmten geographischen Gebiet assoziiert ist, identifizieren.

12. Verfahren gemäß einem der Ansprüche 6-11, wobei die verbesserten Netzwerktopologieinformationen erzeugt werden auf der Basis der Informationen über virtuelle Verbindungen und Teilnehmerinformationen, die eine oder mehrere mit einem oder mehreren der Vielzahl von Knoten verknüpfte Teilnehmervorrichtungen identifizieren.

13. Ein Computerprogrammprodukt, beinhaltend maschinenausführbare Anweisungen, die sich auf computerlesbaren Medien befinden, die, wenn durch einen Prozessor geladen und ausgeführt, den Prozessor veranlassen, Operationen entsprechend dem Verfahren gemäß einem der Ansprüche 6-12 durchzuführen.

## Revendications

1. Un dispositif conçu pour améliorer des informations de topologie de réseau pour un réseau auto-organisé, comprenant :
un ou plusieurs processeurs conçus pour :
obtenir des informations de topologie de réseau qui identifient une pluralité de noeuds d'un réseau et une ou plusieurs liaisons physiques entre des noeuds de la pluralité de noeuds,
les informations de topologie de réseau indiquant une charge de processeur associée à un noeud de la pluralité de noeuds,
la pluralité of noeuds incluant une ou plusieurs stations de base, un ou plusieurs dispositifs mobiles, et une ou plusieurs ressources de réseau,
ces une ou plusieurs ressources de réseau incluant un serveur, un dispositif de routage, un commutateur, un concentrateur, ou une passerelle ;
générer des informations de topologie de réseau améliorées sur la base d'informations de liaison virtuelle, les informations de liaison virtuelle identifiant une ou plusieurs liaisons virtuelles entre des noeuds ;
où les noeuds partagent une liaison virtuelle lorsqu'au moins une des conditions suivantes est remplie :
une première station de base est capable de transférer des dispositifs mobiles à une deuxième station de base,
la première station de base et la deuxième station de base desservent une même zone de couverture cellulaire ou une portion d'une zone de couverture cellulaire en chevauchement,
une première ressource de réseau et une deuxième ressource de réseau desservent des zones géographiques en chevauchement, ou
une paire de dispositifs mobiles est capable d'établir une connexion dispositif-à-dispositif ;
déterminer des informations de performance de réseau sur la base des informations de topologie de réseau améliorées,
les informations de performance de réseau identifiant une dégradation de performance de la pluralité de noeuds, et identifiant une modification à un paramètre de réseau pour accroître la performance de réseau,
la dégradation de performance étant une défaillance ou une liaison qui ne satisfait pas à un seuil de capacité ; et
fournir des informations identifiant la modification au paramètre de réseau afin d'amener la modification au paramètre de réseau à être mise en oeuvre.

2. Le dispositif de la revendication 1, où ces un ou plusieurs processeurs, lorsqu'ils déterminent les informations de performance de réseau, sont conçus pour : générer un modèle afin de prédire les informations de performance de réseau, le modèle sortant les informations de performance de réseau sur la base de la réception des informations de topologie de réseau améliorées comme entrée.

3. Le dispositif de la revendication 2, où ces un ou plusieurs processeurs sont conçus pour :
obtenir des informations de performance de réseau observées, identifiant des valeurs d'informations de performance de réseau observées sur la base de mesures prises dans le réseau ; et
entraîner le modèle sur la base d'une comparaison des informations de performance de réseau observées aux informations de performance de réseau sorties par le modèle.

4. Le dispositif de n'importe lesquelles des revendications précédentes, où les informations de topologie de réseau améliorées sont générées sur la base des informations de liaison virtuelle et d'informations de localisation identifiant un élément parmi : i) une localisation géographique d'un ou de plusieurs noeuds de la pluralité de noeuds ; ii) des informations identifiant une zone de couverture d'un noeud de la pluralité de noeuds, iii) des informations identifiant du trafic réseau associé à une zone géographique donnée.

5. Le dispositif de n'importe lesquelles des revendications précédentes, où les informations de topologie de réseau améliorées sont générées sur la base des informations de liaison virtuelle et d'informations d'abonné identifiant un ou plusieurs dispositifs abonnés connectés à un ou plusieurs noeuds de la pluralité de noeuds.

6. Une méthode pour améliorer des informations de topologie de réseau pour un réseau auto-organisé, exécutée par un dispositif, comprenant le fait :
d'obtenir des informations de topologie de réseau qui identifient une pluralité de noeuds d'un réseau et une ou plusieurs liaisons physiques entre des noeuds de la pluralité de noeuds,
les informations de topologie de réseau indiquant une charge de processeur associée à un noeud de la pluralité de noeuds,
la pluralité of noeuds incluant une ou plusieurs stations de base, un ou plusieurs dispositifs mobiles, et une ou plusieurs ressources de réseau,
ces une ou plusieurs ressources de réseau incluant un serveur, un dispositif de routage, un commutateur, un concentrateur, ou une passerelle ;
de générer des informations de topologie de réseau améliorées sur la base d'informations de liaison virtuelle, les informations de liaison virtuelle identifiant une ou plusieurs liaisons virtuelles entre des noeuds ;
où les noeuds partagent une liaison virtuelle lorsqu'au moins une des conditions suivantes est remplie :
une première station de base est capable de transférer des dispositifs mobiles à une deuxième station de base,
la première station de base et la deuxième station de base desservent une même zone de couverture cellulaire ou une portion d'une zone de couverture cellulaire en chevauchement,
une première ressource de réseau et une deuxième ressource de réseau desservent des zones géographiques en chevauchement, ou
une paire de dispositifs mobiles est capable d'établir une connexion dispositif-à-dispositif ;
de déterminer des informations de performance de réseau sur la base des informations de topologie de réseau améliorées,
les informations de performance de réseau identifiant une dégradation de performance de la pluralité de noeuds, et identifiant une modification à un paramètre de réseau pour accroître la performance de réseau,
la dégradation de performance étant une défaillance ou une liaison qui ne satisfait pas à un seuil de capacité ; et
de fournir des informations identifiant la modification au paramètre de réseau afin d'amener la modification au paramètre de réseau à être mise en oeuvre.

7. La méthode de la revendication 6, où la pluralité de noeuds est une première pluralité de noeuds associés à un premier opérateur de réseau ; et
où le fait d'obtenir les informations de topologie de réseau comprend :
le fait d'obtenir des informations de topologie de réseau qui identifient une deuxième pluralité de noeuds associés à un deuxième opérateur de réseau ; et
où la méthode comprend en sus :
le fait de générer des informations qui identifient une distribution de trafic réseau entre la première pluralité de noeuds et la deuxième pluralité de noeuds.

8. La méthode de la revendication 7 où la première pluralité de noeuds inclut une pluralité de stations de base et une pluralité de ressources de réseau ; et
où des dispositifs mobiles communiquent avec la deuxième pluralité de noeuds via une ou plusieurs stations de base, de la pluralité de stations de base incluses dans la première pluralité de noeuds.

9. La méthode de la revendication 7 où la première pluralité de noeuds inclut une pluralité de stations de base et une pluralité de ressources de réseau ; et
où des dispositifs mobiles communiquent avec la deuxième pluralité de noeuds via une ou plusieurs ressources de réseau, de la pluralité de ressources de réseau incluses dans la première pluralité de noeuds.

10. La méthode de la revendication 9, comprenant en sus :
le fait de déterminer les informations qui identifient la distribution de trafic réseau entre la première pluralité de noeuds et la deuxième pluralité de noeuds sur la base d'informations d'abonné associées à un ou plusieurs noeuds de la deuxième pluralité de noeuds,
les informations d'abonné associées à ces un ou plusieurs noeuds de la deuxième pluralité de noeuds étant différentes des informations d'abonné associées à ces un ou plusieurs noeuds de la première pluralité de noeuds.

11. La méthode de n'importe laquelle des revendications 6 à 10, où les informations de topologie de réseau améliorées sont générées sur la base des informations de liaison virtuelle et d'informations de localisation identifiant un élément parmi i) une localisation géographique d'un ou de plusieurs noeuds de la pluralité de noeuds, ii) des informations identifiant une zone de couverture d'un noeud de la pluralité de noeuds, iii) des informations identifiant du trafic réseau associé à une zone géographique donnée.

12. La méthode de n'importe laquelle des revendications 6 à 11, où les informations de topologie de réseau améliorées sont générées sur la base des informations de liaison virtuelle et d'informations d'abonné identifiant un ou plusieurs dispositifs abonnés connectés à un ou plusieurs noeuds de la pluralité de noeuds.

13. Un produit-programme d'ordinateur comprenant des instructions exécutables par une machine résidant sur des supports lisibles par un ordinateur, qui, lorsqu'elles sont chargées et exécutées par un processeur, amènent le processeur à effectuer des opérations selon la méthode de n'importe laquelle des revendications 6 à 12.
